# EUROPÄISCHE PATENTSCHRIFT

(11) **EP 0 471 181 B1**
(45) Veröffentlichungstag und Bekanntmachung des Hinweises auf die Patenterteilung: **06.10.1993**
(21) Anmeldenummer: 91111190.4
(22) Anmeldetag: 05.07.1991
(51) Int. Cl.: A01C 15/00

(54) **Landwirtschaftliche Verteilmaschine**
Agricultural broadcaster
Epandeuse agricole

(30) Priorität: 17.08.1990 DE 4026034
(43) Veröffentlichungstag der Anmeldung: 19.02.1992
(73) Patentinhaber: Amazonen-Werke H. Dreyer GmbH & Co. KG, D-49205 Hasbergen (DE)
(72) Erfinder: Dreyer, Heinz, Dr. Dipl.-Ing., D-4507 Hasbergen (DE)

(56) Entgegenhaltungen:
- EP-A- 0 216 058
- NL-A- 6 917 642
- US-A- 4 460 214

## Beschreibung

Die Erfindung betrifft eine landwirtschaftliche Verteilmaschine gemäß des Oberbegriffes des Patentanspruches 1.

Eine derartige landwirtschaftliche Verteilmaschine ist beispielsweise durch die deutsche Offenlegungsschrift 38 09 342 bekannt geworden. Diese landwirtschaftliche Verteilmaschine ist als Schleuderdüngerstreuer ausgebildet und über Dreipunktkupplungselemente an den Schlepperkraftheber eines Schleppers anzuordnen. Die Verteilmaschine weist einen Rahmen auf, auf dessen Vorderseite die Dreipunktkupplungselemente, die aus zwei unteren und einem oberen Kupplungselement bestehen, angeordnet sind, über welche die Maschine an den Dreipunktkraftheber eines Schleppers angekuppelt werden kann. Um das Fassungsvermögen des Vorratsbehälters zu vergrößern ist auf den Vorratsbehälter, der an dem Rahmen befestigt ist, ein umlaufendes Aufsatzstück aufzusetzen.

Die Rahmen der Verteilmaschinen sind aus Kosten- und Gewichtsgründen relativ leicht ausgelegt, so daß sie lediglich in der Lage sind, nur ein bestimmtes Gewicht tragen zu können. In verstärktem Maße werden jedoch seit einiger Zeit von der landwirtschaftlichen Praxis als Dreipunktanbaumaschinen ausgebildete Verteilmaschinen mit größerem Fassungsvermögen verlangt. Dieses größere Fassungsvermögen der Vorratsbehälter der Verteilmaschinen läßt sich in einfacher Weise durch das Aufsetzen von großen Aufsatzstücken auf die Vorratsbehälter erreichen. Dem steht jedoch entgegen, daß die Rahmen der Verteilmaschinen das Gewicht ohne weiteres nur bis zu einer bestimmten Größe aufnehmen können.

Der Erfindung liegt nun die Aufgabe zugrunde, auf einfache und kostengünstige Weise die Tragfähigkeit von Rahmen von Verteilmaschinen zu erhöhen, ohne daß der Rahmen aufwendig verstärkt oder ein stärkerer Rahmen werden muß.

Diese Aufgabe wird in erfindungsgemäßer Weise durch die kennzeichnenden Maßnahmen des Anspruches 1 gelöst. Infolge dieser Maßnahmen wird in überraschend einfacher Weise die Tragfähigkeit des Rahmens erhöht. Dadurch, daß das obere Kupplungselement, an welchem der Oberlenker des Dreipunktkrafthebers des die Verteilmaschine tragenden Schleppers angeschlossen wird, sich in einem größeren Abstand zu dem unteren Kupplungselementen befindet, werden sehr günstige Voraussetzungen für die Krafteinleitung in dem Rahmen des Vorratsbehälters geschaffen. Somit wird auf einfache Weise gleichzeitig die Voraussetzung für die Vergrößerung des Dreipunktkupplung von Kategorie II auf Kategorie III geschaffen.

Infolge dieser Maßnahmen hat der Aufsatz quasi einen eigenen integrierten Oberlenkeranschluß, wodurch die Verteilmaschinen, beispielsweise normaler Weise nur bis zu einem Fassungsvermögen von 2000 l ausgelegt sind, auf einfachste Weise auf ein Fassungsvermögen von 3000 l und mehr Litern Fassung und Tragvermögen gebracht werden, ohne daß der Grundrahmen selbst entsprechend stark angelegt sein muß. Somit ist es also nicht erforderlich, für beispielsweise Maschinen mit einem Fassungsvermögen von 3000 l und mehr einen speziellen Rahmen in Vergleich zu den Maschinen von 1000 l und 2000 l Fassungsvermögen vorzusehen, sondern durch die erfindungsgemäße Maßnahme wird durch den erfindungsgemäßen Aufsatz, wobei der Kupplungspunkt gegenüber dem normalen Oberlenkeranschluß nach oben versetzt wird, die Tragfähigkeit des Rahmens der Verteilmaschine in äußerst einfacher Weise überraschend verstärkt bzw. entlastet. Über diesen erfindungsgemäßen Oberlenkeranschluß, der von dem Rahmenverlängerungsteil mit gebildet wird, wird einerseits eine Erhöhung der Tragfähigkeit des Rahmens der Verteilmaschine erreicht und gleichzeitig auch die Voraussetzung dafür geschaffen, daß Vorder- und Rückwand des Aufsatzes Tragfunktionen übernehmen, so daß die Stabilität von Rahmen, Vorratsbehälter und Aufsatz wesentlich erhöht wird.

In einer bevorzugten Ausführungsform ist erfindungsgemäß vorgesehen, daß an der Vorderseite der Verteilmaschine ein sich von dem oberen Kupplungselement nach oben erstreckendes Rahmenverlängerungsteil vorgesehen ist, an welchen in einem Abstand zu dem oberen Kupplungselement das weitere Kupplungselement angeordnet ist. Hierbei ist das Rahmenverlängerungsteil mit dem oberen Kupplungselement, welches sich serienmäßig an dem Rahmen befindet, angeordnet. Hierdurch wird in einfacher Weise eine große Stabilität erreicht.

Um eine äußerst günstige Krafteinleitung, welches sich äußerst positiv auf die Erhöhung der Tragfähigkeit des Rahmens auswirkt, ist erfindungsgemäß vorgesehen, daß in dem Vorratsbehälter zumindest eine Strebe angeordnet ist, welche mit ihrem einen Ende mit dem Rahmenverlängerungsteil und mit ihrem anderen Ende mit dem hinteren Teil des Rahmens der Verteilmaschine und/oder der Rückwand des Vorratsbehälters verbunden ist. Hierdurch ergibt sich eine äußerst große Erhöhung der Tragfähigkeit des Rahmens, selbst bei sehr leicht gebauten Verteilmaschinen, die an sich für geringe Tragfähigkeit ausgelegt sind. Durch die Strebe wird in äußerst einfache Weise die Maschine auch im hinteren Bereich gehalten.

Um ein Ausbeulen der Aufsatzstücke an ihrem Längsseiten zu vermeiden, ist erfindungsgemäß vorgesehen, daß in dem Vorratsbehälterteil ein Längsstrebe angeordnet ist, welche die Vorder- und Rückwand des Aufsatzstückes miteinander verbindet. Hierbei kann es vorteilhaft sein, wenn die Längsstrebe auf ihrer einen Seite ebenfalls mit dem Rahmenverlängerungsstück verbunden ist.

Desweiteren sieht die Erfindung in einer besonderen Ausführungsform vor, daß das zusätzliche untere Kupplungselement in das Aufsatzstück integriert angeordnet ist.

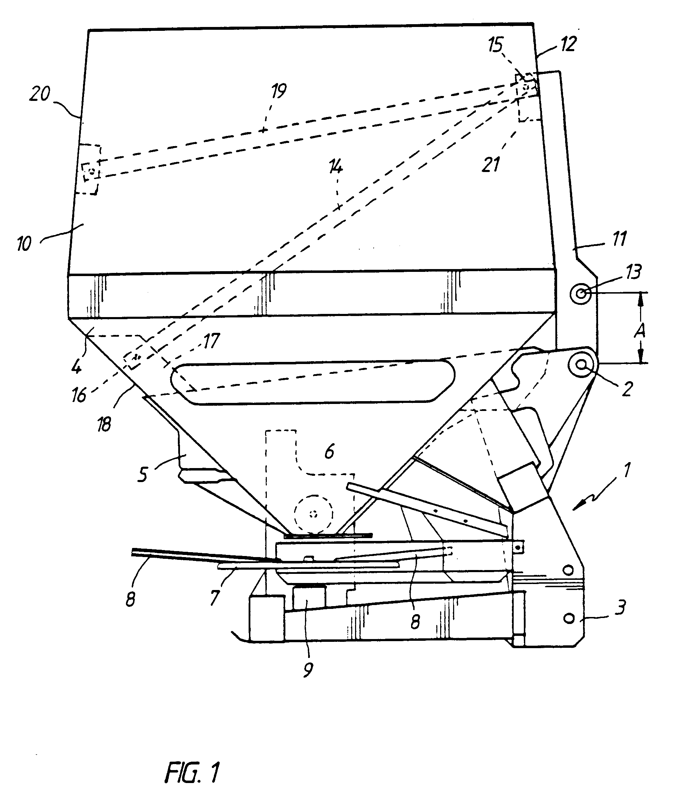

Weitere Einzelheiten der Erfindung sind den Zeichnung zu entnehmen. Hierbei zeigen
- Fig. 1: die erfindungsgemäße Verteilmaschine in der Seitenansicht und

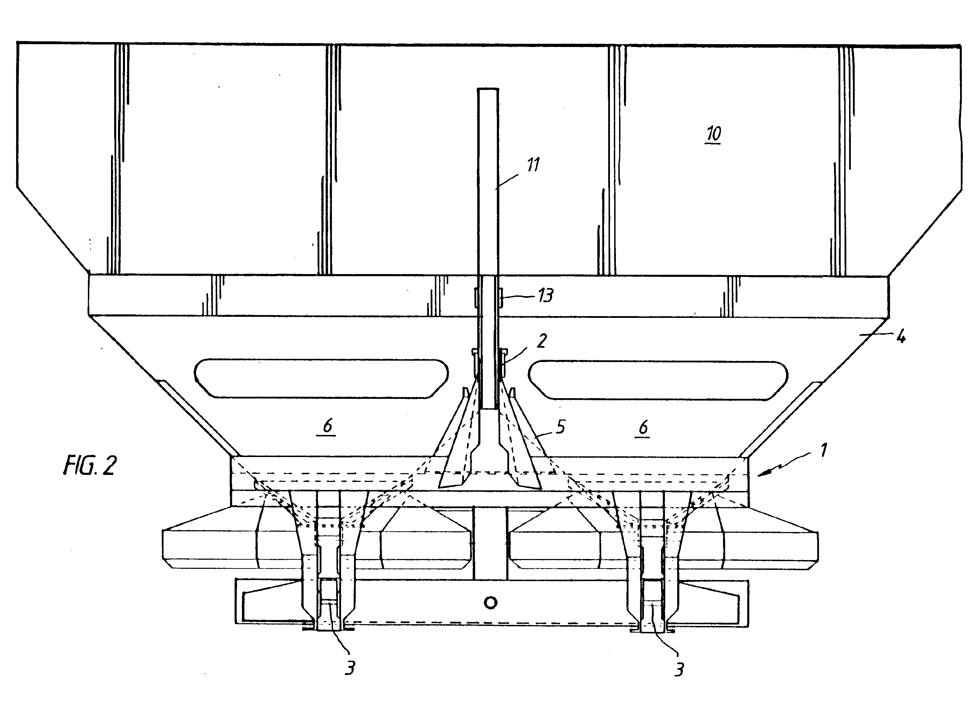

- Fig. 2: die Verteilmaschine in der Vorderansicht.

Die Verteilmaschine ist als Schleuderdüngerstreuer ausgebildet. Die Verteilmaschine weist den Rahmen 1 auf, der auf seiner Vorderseite mit dem oberen Dreipunktkupplungselement 2 und mit den beiden unteren Kupplungselementen 3 zum Anbau an einen nicht dargestellten Dreipunktkraftheber eines Ackerschleppers ausgerüstet ist. Die Verteilmaschine weist weiterhin den Vorratsbehälter 4 auf. Der Vorratsbehälter 4 wird in seinem unteren Bereich durch das dachförmige Mittelteil in die beiden Auslaßtrichter 6 aufgeteilt. Unterhalb der beiden Auslaßtrichter 6 befinden sich die beiden Schleuderscheiben 7 mit den Wurfelementen 8. Die Schleuderscheibe 7 wird über das Getriebe 9 rotierend angetrieben. Das dachförmige Mittelteil 5 ist auf seiner Vorderseite mit dem Rahmen 1 verbunden, so daß das dachförmige Mittelteil tragende Funktionen übernimmt.

Das Fassungsvermögen des Vorratsbehälters 4 wird durch das Aufsatzstück 10 erheblich vergrößert. Auf der Vorderseite des Aufsatzstückes 10 ist das sich von dem oberen Dreipunktkupplungselement 2 des serienmäßigen Rahmens 1, nach oben erstreckende Rahmenverlängerungsteil 11 angeordnet. Das Rahmenverlängerungsteil 11 ist mit der Vorderwand 12 des Aufsatzstückes 10 verbunden. An dem Rahmenverlängerungsteil 11 befindet sich in einem Abstand A das weitere obere Kupplungselement 13. Somit wird die von den Dreipunktkupplungselementen 2 und 3 gebildete Dreipunktkupplung in Größe Kategorie II auf die Kategorie III erweitert, die von dem oberen Kupplungselement 13 und dem weiteren Kupplungselement 3 gebildete Dreipunktkupplung erweitert. Somit ist auf der Vorderseite 12 des Aufsatzstückes 10 in einem Abstand A zu dem oberen Kupplungselement 2 der Verteilmaschine ein weiteres bzw. zusätzliches Kupplungselement 13 im Abstand hierzu angeordnet. Das Rahmenverlängerungsteil 11 weist an seinem unteren Ende eine Bohrung auf, durch welche der Bolzen des oberen Kupplungselementes 2 gesteckt ist, so daß das Rahmenverlängerungsteil 11 mit dem Rahmen 1 der Verteilmaschine verbunden ist.

In dem Vorratsbehälter 4 und dem Aufsatzstück 10 ist die Strebe 14 angeordnet, die mit ihrem einen Ende 15 mit dem Rahmenverlängerungsteil 11 und mit ihrem anderen Ende 16 mit dem hinteren Teil 17 des Rahmen 1 der Verteilmaschine und der Rückwand 18 des Vorratsbehälters 4 verbunden ist. Diese Strebe 14 trägt erheblich zur Erhöhung der Tragfähigkeit des Rahmens 1 bei. Über die Strebe 14 werden Kräfte in das Rahmenverlängerungsteil 11 in vorteilhafter Weise eingeleitet. Desweiteren ist in dem Aufsatzstück 10 die Längsstrebe 19 angeordnet, welche die Vorderwand 12 und die Rückwand 20 des Aufsatzstückes 10 miteinander verbindet. Hierdurch ergibt sich eine große Stabilität des Aufsatzstückes 10. Die Längsstrebe 19 ist auf ihrer Vorderseite über die Platte 21 mit dem Rahmenverlängerungsteil 11 verbunden.

Das Rahmenverlängerungsteil 11 ist, wie bereits gesagt, mit der Vorderwand 12 des Aufsatzstückes 10 verbunden. Somit ist das an dem Rahmenverlängerungsstück 11 angeordnete zusätzliche obere Kupplungselement 13 in das Aufsatzstück 10 integriert angeordnet. Das Rahmenverlängerungsteil 11 kann mit dem Aufsatzstück 10 verschweißt oder verschraubt, oder in anderer Weise verbunden sein.

## Patentansprüche

1. Landwirtschaftliche Verteilmaschine, die als Dreipunktanbaumaschine ausgebildet ist, mit einem Rahmen (1), an dem zwei untere Kupplungselemente (3) und ein oberes Kupplungselement (2) angeordnet sind, und einem Vorratsbehälter (4), dessen Fassungsvermögen durch zumindest ein Aufsatzstück (10) zu vergrößern ist, dadurch gekennzeichnet, daß auf der Vorderseite (12) der Verteilmaschine und/oder des Aufsatzstückes (10) in einem Abstand (A) zu dem oberen Kupplungselement (2) der Verteilmaschine ein alternativ genutztes Kupplungselement (13) im Abstand hierzu angeordnet ist.

2. Landwirtschaftliche Verteilmaschine nach Anspruch 1, dadurch gekennzeichnet, daß an der Vorderseite der Verteilmaschine ein sich von dem oberen Kupplungselement (2) nach oben erstreckendes Rahmenverlängerungsteil (11) vorgesehen ist, an welchem in einem Abstand (A) zu dem oberen Kupplungselement (2) das alternativ genutzte Kupplungselement (13) angeordnet ist.

3. Verteilmaschine nach einem oder mehreren der vorstehenden Ansprüche, dadurch gekennzeichnet, daß in dem Vorratsbehälter (4) und dem Aufsatzstück (10) zumindest eine Strebe (14) angeordnet ist, welche mit ihrem einen Ende (15) mit dem Rahmenverlängerungsteil (11) und mit ihrem anderen Ende (16) mit dem hinteren Teil (17) des Rahmens (1) der Verteilmaschine und/oder der Rückwand (18) des Vorratsbehälters (4) verbunden ist.

4. Verteilmaschine nach einem oder mehreren der vorstehenden Ansprüche, dadurch gekennzeichnet, daß in dem Vorratsbehälter (4) und/oder dem Aufsatzstück (10) eine Längsstrebe (19) angeordnet ist, welche die Vorder- (12) und Rückwand (20) des Aufsatzstückes (10) miteinander verbindet.

5. Verteilmaschine nach einem oder mehreren der vorstehenden Ansprüche, dadurch gekennzeichnet, daß die Längsstrebe (19) auf ihrer einen Seite mit dem Rahmenverlängerungsstück (11) verbunden ist.

6. Verteilmaschine nach einem oder mehreren der vorstehenden Ansprüche, dadurch gekennzeichnet, daß das zusätzliche obere Kupplungselement (13) in das Aufsatzstück (10) integriert angeordnet ist.

## Claims

1. Agricultural broadcaster, which is in the form of a three-point attachable machine, including a frame (1), on which two lower coupling members (3) and one upper coupling member (2) are disposed, and a hopper (4), the capacity of which is to be increased by at least one attachment part (10), characterised in that an alternatively used coupling member (13) is disposed on the front end (12) of the broadcaster and/or of the attachment part (10) at a spacing (A) from the upper coupling member (2) of the broadcaster.

2. Agricultural broadcaster according to claim 1, characterised in that a frame enlargement member (11) is provided at the front end of the broadcaster, which frame enlargement member extends upwardly from the upper coupling member (2) and on which the alternatively used coupling member (13) is disposed at a spacing (A) from the upper coupling member (2).

3. Broadcaster according to one or more of the preceding claims, characterised in that at least one strut (14) is disposed in the hopper (4) and the attachment part (10), one end (15) of said strut being connected to the frame enlargement member (11), and the other end (16) of said strut being connected to the rear portion (17) of the frame (1) of the broadcaster and/or the rear wall (18) of the hopper (4).

4. Broadcaster according to one or more of the preceding claims, characterised in that one longitudinal strut (19) is disposed in the hopper (4) and/or the attachment part (10) and interconnects the front wall (12) and rear wall (20) of the attachment part (10).

5. Broadcaster according to one or more of the preceding claims, characterised in that one end of the longitudinal strut (19) is connected to the frame enlargement member (11).

6. Broadcaster according to one or more of the preceding claims, characterised in that the additional upper coupling member (13) is disposed so as to be incorporated into the attachment part (10).

## Revendications

1. Epandeur agricole en forme de machine attelée en trois points, comprenant un châssis (1) et portant deux éléments inférieurs d'attelage (3) et un élément d'attelage supérieur (2) ainsi qu'un réservoir d'alimentation (4) dont la capacité est augmentée par au moins une pièce formant rehausse (10), épandeur caractérisé en ce que sur la face avant (12) de l'épandeur et/ou de la pièce formant rehausse (10), à une distance (A) de l'élément supérieur (2) d'attelage de l'épandeur, on a un élément d'attelage (13) à usage alternatif.

2. Epandeur agricole selon la revendication 1, caractérisé en ce que sur la face avant de l'épandeur, on a une pièce (11) prolongeant le châssis qui remonte à partir de l'élément d'attelage supérieur (2), et sur laquelle est prévu à la distance (A) par rapport à l'élément supérieur (2) de l'attelage, un élément d'attelage (13) à usage alternatif.

3. Epandeur selon l'une ou plusieurs des revendications précédentes, caractérisé par au moins une entretoise (14) dans le réservoir d'alimentation (4) et sur la pièce formant rehausse (10), une extrémité (15) de cette entretoise étant reliée à la pièce 11 prolongeant le châssis et l'autre extrémité (16) étant reliée à la partie arrière (17) du châssis (1) de l'épandeur et/ou à la paroi arrière (18) du réservoir d'alimentation (4).

4. Epandeur selon une ou plusieurs des revendications précédentes, caractérisé en ce qu'une entretoise longitudinale (19) est prévue dans le réservoir d'alimentation (4) et/ou sur la pièce formant rehausse (10), cette entretoise reliant la paroi avant (12) et la paroi arrière (20) de la pièce formant rehausse (10).

5. Epandeur selon une ou plusieurs des revendications précédentes, caractérisé en ce que l'entretoise longitudinale (19) est reliée d'un côté à la pièce (11) prolongeant le châssis.

6. Epandeur selon une ou plusieurs des revendications précédentes, caractérisé en ce que l'élément d'attelage supplémentaire (13) est intégré à la pièce formant rehausse (10).
